## Europäisches Patentamt
## European Patent Office
## Office européen des brevets

(19)

(11) Publication number: **0 051 403**

A2

(12) **EUROPEAN PATENT APPLICATION**

(21) Application number: 81304972.3

(22) Date of filing: 22.10.81

(51) Int. Cl.³: **G 06 K 1/02**
G 07 F 7/02, G 06 K 13/06
G 06 K 7/016, G 06 K 7/08

(30) Priority: 29.10.80 US 201693
29.10.80 US 201706
10.11.80 US 205145

(43) Date of publication of application:
12.05.82 Bulletin 82/19

(84) Designated Contracting States:
AT BE CH DE FR GB IT LI LU NL SE

(71) Applicant: SERVICE DISTRIBUTORS, INC.
567 Seventh Avenue
San Francisco California(US)

(72) Inventor: Sidline, George A.
c/o Candex Pacific 693 Veterans Boulevard
Redwood City California 94063(US)

(72) Inventor: Rath, Lee A.
c/o Revere Extruders, Inc. 2595 Eden Landing Road
Hayward California 94545(US)

(72) Inventor: Zhabokrug, Ilya
c/o Candex Pacific 693 Veterans Boulevard
Redwood City California 94063(US)

(72) Inventor: Jones, Shattuc
c/o Candex Pacific 693 Veterans Boulevard
Redwood City California 94063(US)

(74) Representative: Horton, Andrew Robert Grant et al,
BOULT, WADE & TENNANT 27 Furnival Street
London, EC4A 1PQ(GB)

(54) Card punch.

(57) For punching a card which is continuously moving as it is being punched, the punch element (77) is pivoted to an actuating lever (63) and pivots against the force of a spring (84) as the card moves. The spring returns to the punch to its initial position when the card has passed the punch station. A solenoid (66) pivots the actuating lever. Provision is made for adjustment of the distance of penetration of the punch. A resilient roller (87) engaging the face of the card opposite the punch backs up the punch. The card has two separate magnetic tracks, defining respectively a security code and the number of uses remaining on the card. The other track is a control having signals which are read directly proportional to the speed of movement of the card. The card is inserted in a slot in a machine which takes in the card into the machine, reads the data on both tracks, reverses the direction of the card, and impacts the card with a hole to indicate that it has been used once. The position of impact is controlled by the number of uses of the card prior to the particular use and the control track. While the card is travelling in the reverse direction the first track is re-recorded with the number of remaining times of use and a security code at a rate determined by the control track.

Fig.4

Croydon Printing Company Ltd.

"CARD PUNCH"

This invention relates to a new and improved punch mechanism for machine actuator cards.

The state of the art is represented by U.S. Patents Nos. 4,020,325 issued April 26, 1977 and 4,024,379 issued May 17, 1977. The present invention is constituted by various features which both jointly and severally constitute improvements over this prior art. It will be observed that many of the features of the mechanisms hereinafter described are likewise disclosed in said patents; and for brevity, some of these features are not herein described in detail.

A continuing problem in the service of providing coin-operated laundry machines installed in apartment houses and other locations is the temptation to cheat the machines either by the use of slugs, by prying open coin boxes, and the like. The use of encoded magnetic tape cards which initially are so encoded as to furnish plural operations of the washer or dryer machines is disclosed in said patents. The present invention provides a number of improvements thereon.

One of the principal features of the present invention is that as the card is fed through the machine, a punch impacts a hole similar to a pin prick on the card and at the same time deforms the card in a proper location (depending upon the number of available uses remaining on the card), and this permanently marks the card in such a way as to indicate to the user the number of uses remaining on the card and to reduce disputes between the management and the patrons over the number of times the card has been used. Each time the card is used, a hole is impacted in an adjacent position, in sequence, so that the total number of uses may readily be counted to settle such disputes and to indicate to the patron how many uses remain.

Another preferred feature of the invention is that the cost of each use need not necessarily be in integral multiples of a unit of currency. Consequently, the cost of each use may be set at any value, even fractional.

Another preferred feature of the invention is the fact that although the card is punched, no material need be cut out and there need be no chaff which might otherwise cause a disposal problem or might interfere with proper operation of the card feed or the electronic system of the machine.

Furthermore, the holes with their deformations may readily be felt and can, therefore, be easily counted by persons having visual impairment.

Still another preferred feature of the invention is the fact that the device is simple and inexpensive as compared with other punching mechanisms.

It will be understood that in accordance with the present invention the card preferably moves continuously and as it is moving the punching operation is performed. Accordingly, means is provided for the punch member to move with the card so as not to obstruct its passage.

In the apparatus hereinafter described, one of the features is the punching of holes in the card and the encoding of information on the magnetic strip as independent functions. To locate each hole in proper position and properly to encode a security code and data showing the number of operations still remaining on the card, it is necessary that the mechanical and electronic devices which perform these functions be energised in synchronism with the movement of the card. The present invention provides means for ensuring proper timing of these functions of the apparatus. It is a preferred feature of the present invention that the card which the user receives has a magnetic strip, and that this strip has two tracks. One track contains a security code and other data as to the number of machine operations which remain on the card. The other track has timing signals. A dual head is mounted on the apparatus which reads the two tracks.

It will be understood that the velocity and continuity of movement of the card through the apparatus may vary, depending upon the condition of the card, delays, occasioned by the punching operation, and other factors. The present invention provides in a preferred form compensation for such variation, and causes energisation of the mechanical and electrical functions of the machines.

One of the problems in the use of cards has been that the density of the recording upon the magnetic tape varies from unit to unit and the data rate varies as a function of speed. This makes interchangeability from unit to unit troublesome. The present invention promotes such interchangeability.

Another preferred feature of the invention is the fact that the timing signals are initially encoded on the tape at precise speed, assuring uniform density. Hence, the clock rate is directly proportional to the speed of movement of the card. The signals on this second track function as a clock and do not vary from card to card.

Another preferred feature of the invention is the fact that the use of an oscillator in the electronic system for reading and writing of data by the apparatus may be eliminated.

The present invention provides in a preferred form better resolution, accuracy, and repeatability of the location of the impact of the punch on the card.

Heretofore bent sheet metal trays have been used with interposed shims at the edges to define a passageway for the card. The edges of the cards were liable to stick in a crevice where the trays and the shims formed a corner. In a preferred embodiment of the invention this disadvantage is avoided.

A further feature of the preferred embodiment of the invention is the ease with which it can be accurately and uniformly made.

Other objects of the present invention will become apparent from the following detailed description of a preferred embodiment. Reference will be made to the accompanying drawings, in which:-

Figure 1 is a perspective view of the preferred embodiment, showing a card about to be inserted;

Figure 2 is a sectional view taken substantially along the line 2-2 of Figure 1;

Figure 3 is a sectional view taken substantially along the line 3-3 of Figure 1;

Figure 4 is a sectional view taken substantially along the line 4-4 of Figure 2;

Figure 4a is a sectional view taken substantially along the line 4a-4a of Figure 4

Figure 5 is a perspective view of a card used with the present invention;

Figure 6 is a cross-section taken substantially along the line 6-6 of Figure 2;

Figure 7 is a view, similar to Figure 6, of a modification; and

Figure 8 is a schematic block diagram of a preferred electronic system for the invention.

Many of the mechanisms hereinafter described appear in the aforesaid patents 4,020,325 and 4,024,379 and reference should be made to those specifications for further details.

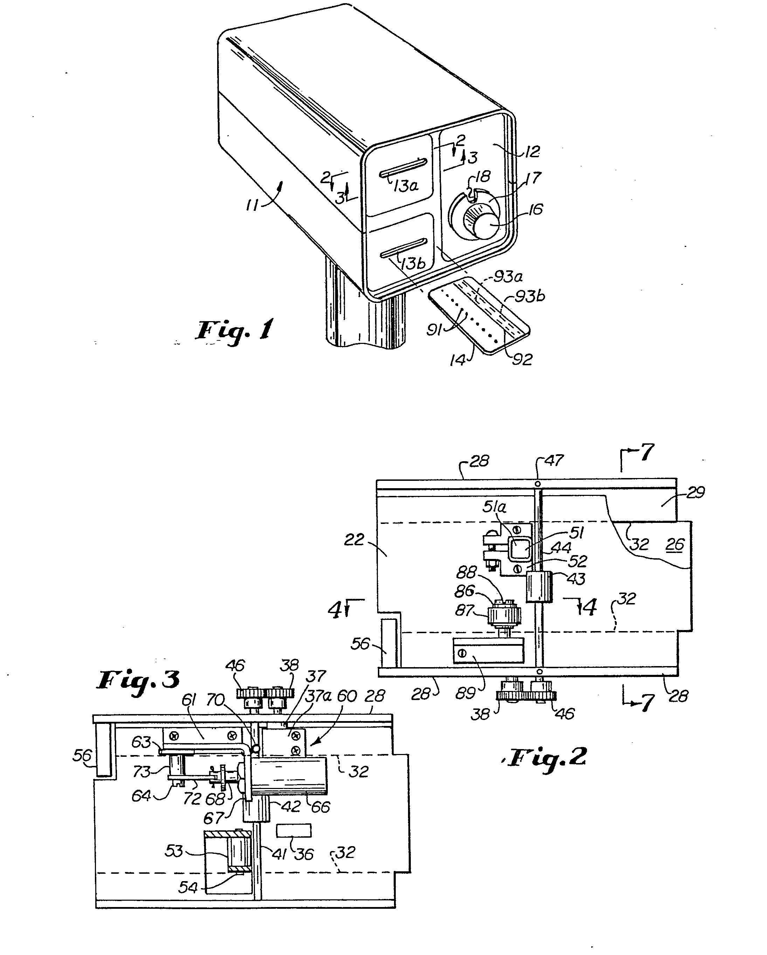

In Figure 1, the casing 11 is intended to be suitable for installation in an area where a plurality of washing and drying machines are installed. It will be understood that the invention hereinafter described is useful in other environments, but the presently preferred use is as has been heretofore stated. Features of the structure shown in Figure 1 are the plural card insertion slots 13a, 13b, for the card 14. The plural slots are useful so that if the mechanism or electronics associated with one of the slots is malfunctioning, the user may insert the card in the other slot, thereby preventing all of the laundry machines from being inoperative. In a preferred use, there are a number of laundry machines served by a single casing 11. The user turns the knob 16 to select a particular machine which he wishes to use. Thus, dial cover 17 is formed with a recess or window 18 through which a number corresponding to the selected machine is observed.

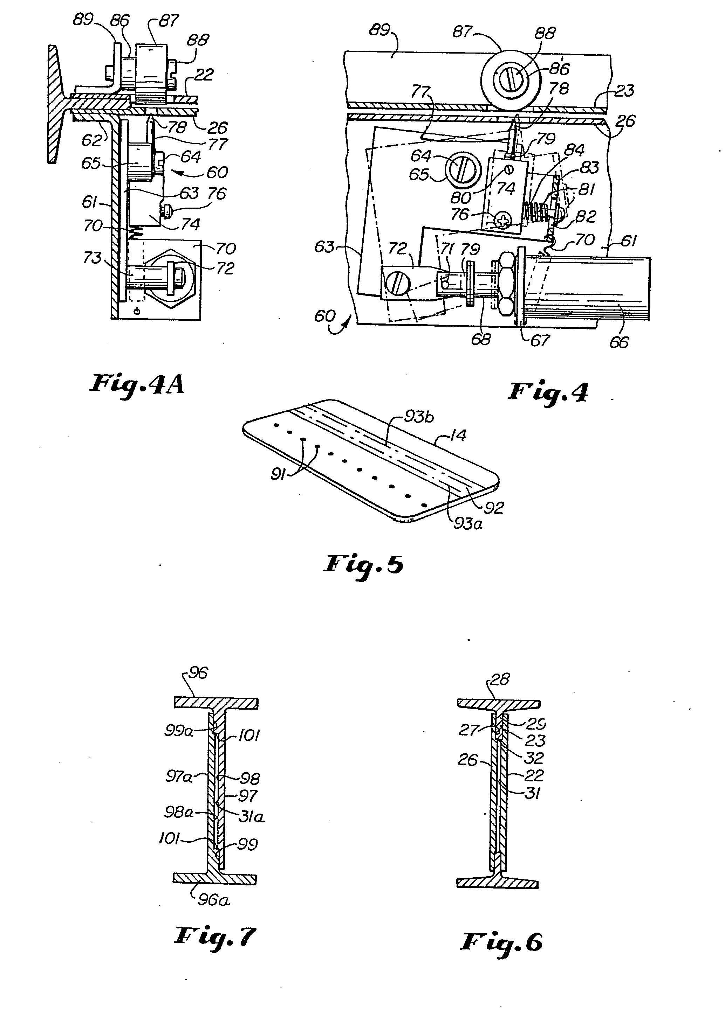

Immediately within the front 13 and in alignment with the top and bottom of slot 13a are two horizontal, vertically spaced plates 22 and 26. Details of construction of said plates and their mounting are shown in Figure 6. Thus, upper plate 22 has relieved or rebated bottom longitudinal edges 23 and plate 26 has relieved or rebated top longitudinal edges 27. On either side, a T-shaped member 28 is provided and the leg 29 thereof fits into the rebates 23 and 27. The thickness of the leg 29 and the depth of rebates 23, 27 are such that the passageway 31 between the opposed plates 22, 26 is slightly greater than the thickness of the card 14. Also, the distance between the inner edges 32 or bottoms of the legs 29 is slightly greater than the width of the card 14. Accordingly, the passageway 31 is accurately defined by the plates 22, 26 and the inner edges 32. The possibility of worn or damaged cards 14 lodging in the walls of the passageway 31 is eliminated.

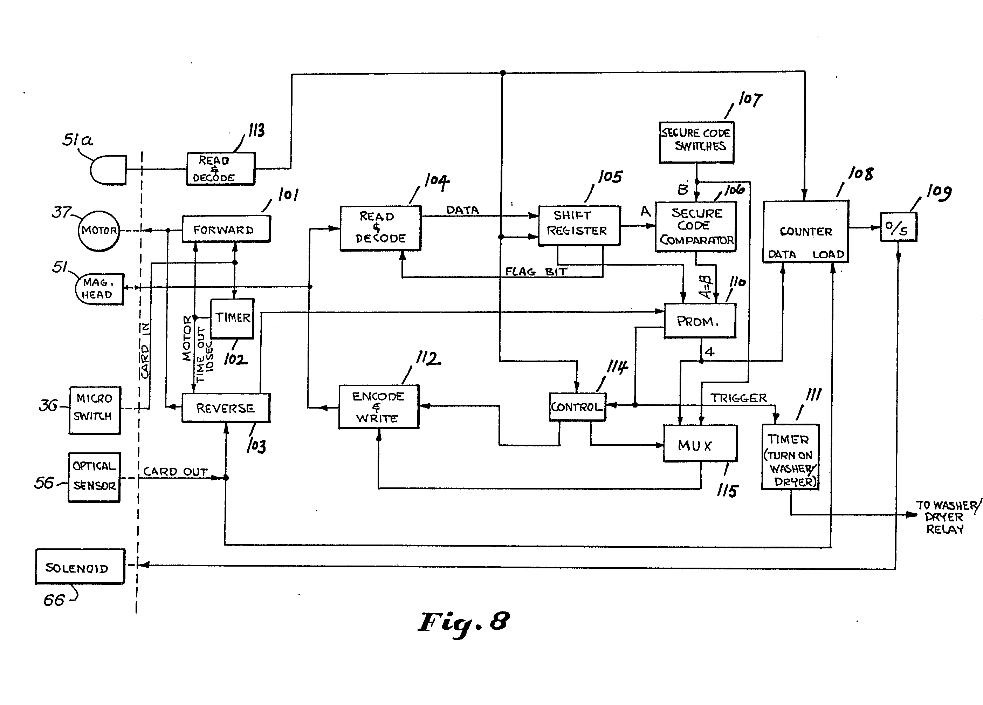

In Figure 7, a modified structure is shown. A T-shaped member 96 is provided. The leg 97 thereof is formed with a first relief or rebate 98 spaced from the outer edge of the member 96, and then near its outer extremity with a second relief or rebate 99. A second T-shaped member 96a having a leg 97a and first and second reliefs 98a, 99a overlaps the first-mentioned T-shaped member 96. The shoulders 101 of the first reliefs 98, 98a are spaced by the width of card 14 and the distance between the legs 97, 97a allows for the thickness of the card. The advantage of Figure 7 over Figure 6 is that the members 96 of Figure 7 may be made as an extrusion. The two members 96 are identical in cross-section, thus reducing the cost of a manufacturing die.

The user positions the card as shown in Figure 1 and inserts the card partially within one of the slots 13a, 13b. The passageway 31 in registry with the slot accurately guides the passage of the card 14 into and out of the machine.

Mounted on bottom plate 26 or leg 97a is a microswitch 36 having a switch arm (not shown) which extends into the passageway 31. The inner edge of the card moves the switch arm and energises motor 37 which is mounted in motor clamp 37a. On the shaft of motor 37 is a gear 38 which meshes with a gear 39 on the end of a drive shaft 41. A knurled roller 42 is fixed for rotation with shaft 41 and engages the card 14 and drives it inwards of the apparatus. Mounted on the lower plate 26 or leg 97a is a back-up roller 43 in registry with the roller 42. Roller 43 is mounted on shaft 44 carrying a gear 46 which meshes with gear 39. Springs 47 which are embedded in the members 28 or 96, 96a bear upon the shaft 44 and bias the back-up roller 43 toward the roller 42 so that pressure is applied on the card 14. As the rollers 42, 43 turn, the card is frictionally engaged and driven. The positions of the rollers 42, 43 are such that when the user has fully inserted the card 14, the card is pulled completely within the casing 11, and is out of reach of the user.

As the card is driven into the machine, it passes a dual reading and recording head 51, 51a positioned above a window in plate 22. Head assembly 51, 51a is mounted in a holder 52 secured to plate 22 and biased into the passageway 31 so that the head assembly 51, 51a is in contact with the card 14. A back-up roller 53 having a shaft 54 is mounted on the plate 27 immediately below head 51, 51a and also fits into an aperture in plate 27. This ensures that the card travels in contact with the heads. Of course, other means of mounting the heads may be employed.

At the inner end of plate 22 is another window in which is installed an optical sensor 56. When the inner edge of the card 14 encounters the sensor 56, then by means hereinafter explained, the motor 37 reverses and rollers 42, 43 drive the card 14 toward the slot 13, and the punch hereinafter described impacts card 14.

The punch mechanism 60, in a preferred embodiment, is illustrated in Figure 4. A support 61 is "L" shaped in cross-section. The top flange 62 of the support 61 is secured to the bottom plate 26. A carrier in the form of a bell crank 63 is secured by a pivot 64 to the support 61.

A solenoid 66 is mounted on a bracket 67 which is an extension (at right angles) of support 61. The armature 68 of the solenoid 66 at its distal end is formed in a clevis 79 pinned by a pin 71 to a link 72 which is pivotally attached to the lower end of the bell crank 63 by means of a stub spacer 73.

A needle holder 74 is pivotally attached to the upper arm of the bell crank 63 by a pivot 76. A needle 77 received in the holder 74 has a point 78 at the distal end and its proximal end 79 is threaded into the upper end of the needle holder 74. A set screw 80 holds the needle 77 in an adjusted position. Projecting outwardly (to the left in Figure 4) from the needle holder 74 is a pin 81 which projects through an elongated slot 82 in an ear 83 which extends at right angles to the plane of the bell crank 63. A compression spring 84 surrounds pin 81 and is interposed between the ear 83 and the needle holder 74, biasing needle holder 74 against a stop 65. A tension spring 70 is attached at one end to the ear 83 and at its other end to the bracket 67. The spring 70 biases the bell crank 63 in a clockwise direction about the pivot 64.

A backing roller 86 has a rubber or rubber-like face 87 secured by a screw 88 to a right angle support 89 mounted on the upper plate 22.

As the card 14 is driven to the right, as viewed in Figure 4, at an appropriate time as hereinafter explained, the solenoid 66 is energised, causing the bell crank 63 to pivot counter-clockwise to the ghosted position shown in Figure 4. The point of needle 77 pricks a hole 91 (Figure 5) at an appropriate location in card 14. The card 14 moves continuously to the right, as viewed in Figure 4, thus causing the needle 77 to pivot clockwise, as viewed in Figure 4, relative to bell crank 63 against the force of the spring 84. On de-energisation of the solenoid 66, the force of spring 70 causes armature 68 to extend outwardly relative to solenoid 66 and pivots the bell crank 63 clockwise towards its initial position. The point 78 of the needle 77 is thereby retracted below the level of passageway 31 and out of contact with the card 14. The spring 84 returns the needle holder 74 to its initial position.

The card 14 is impacted with small holes 91 as shown in Figure 5 because the point 78 forces the card against the rubber face 87 of the roller 86. The holes 91 are formed without any cutting out of material of the card 14. Hence, chaff is avoided. Chaff might interfere with functioning of the electronic apparatus or block the passageway 31. By reason of the resilience of the face 87, the material around the hole 91 is permanently deformed. Even if the card be ironed the holes remain and any dispute as to how many times a card 14 has been punched is eliminated.

The card 14 has a magnetic strip 92 (Figure 5) extending longitudinally thereof located in such a position that it will not be damaged by the drive wheels 42 and 43 and such that the strip 92 will pass directly under the dual heads 51, 51a. The strip 92 is encoded with two separate tracks 93a, 93b adjacent opposite edges of the strip 92; each track occupies approximately half the width of the tape strip.

Attention is now directed to Figure 8, which is a schematic diagram of the electric circuit. When the leading edge of a card 14 closes the switch 36, a signal is directed to the forward control circuit 101 which starts motor 37 and also a timer 102. After ten seconds the timer disables the forward control circuit and reverse control circuit 103 so as to turn off the motor 37 and thereby to prevent the motor from burning out should a jam occur. Strip 92 passes under magnetic head 51 which reads the data which has previously been encoded thereon (as described in U.S. Patent No.4,020,325). The data is decoded by a decode unit 104 and is fed to shift register 105.   A comparator 106 compares the decoded data with the security code (as set by secret switches 107) for the particular machine.   It will be understood that it is desirable that a given card 14 be used only with one establishment where washers-dryers are installed; or, at most, a restricted number of such establishments.   If the security code on the card matches that for a particular installation as determined by the comparator, the shift register also stores the number of uses still remaining recorded on the track 93a. If the number encoded on the track 93a is zero, the card is moved out of the machine (when sensor 56 actuates the reversing circuit 103) without further action occurring. While the head 51 is reading track 93a, head 51a is reading track 93b, which consists of a series of accurately encoded timing pulses.   These pulses replace the clock extraction circuitry and other mechanical or electronic means which time the electronic functions of the circuit of Figure 8.   It will be understood that the speed of movement of card 14 through passageway 31 may vary depending on various conditions, including the condition of the card.   It is important that punching, reading, re-recording, etc., all occur at accurately spaced intervals relative to the length of card 14.   The track 93b, moving conjointly with the card, ensures that these events occur in proper time sequence.

When the card 14 is fully within the machine, its leading edge interrupts the field of view of optical sensor 56 which reverses motor 37 through the reverse control circuitry and also sends a signal to the position counter 108.   The track 93b feeds signals (via decoder 113) to the position counter 108.   As the motor 37 turns to drive the card 14, these signals are fed, at a rate proportional to the speed of the card, to the position counter and the control circuit 114. After a proper number of pulses have been received, based on the number of uses remaining on the card, the "one shot" 109 is energised and this activates solenoid 66 to impact the card 14 as has previously been explained in connection with the punch. Meanwhile, the PROM 110 energises the timer 111 which turns on the washer-dryer relay, the particular machine being selected by means of the knob 16 shown in Figure 1 but not shown in Figure 8. PROM (Programmable Read Only Memory) 110 is addressed by the contents of the shift register, the output of the PROM then being one less than the contents of the shift register unless the contents of the shift register is already zero, at which point the output of the PROM remains zero. The output of the PROM determines the number of uses remaining on the card, and which number is to be encoded by means of encoder 112 onto the track 93a. The magnetic head 51 is energised to encode the track 93a with the security code (provided by way of MUX transmitter 115) and the PROM output. Simultaneously, the magnetic head 51a reads the pulses from the track 93b. These timing signals control the timing of the encoded data, thus eliminating the need for an oscillator and ensuring uniform data density from card to card.

Track 93a contains data and track 93b is a reference or clock track. These tracks are recorded simultaneously by a master encoding such as that disclosed in U.S. Patent No. 4,020,325. The clock track 93b is a square wave of uniform mark-space ratio. Its rate is four times the data rate. The phasing between clock and data is such that the assertive edge of the clock coincides with the bit cell boundary of the data.

When the tracks 93a and 93b are read by the heads 51 and 51a, the clock track 93b is read simultaneously with the data track 93a. The second clock transition after the bit cell boundary is used to strobe the data to make the determination whether the bit is a "1" or a "0". The technique therefore makes the reading of the data independent of speed, within the limitations imposed by the response of the electronics.

When new data is over-written on the data track 93a, the clock track 93b is read and the data is written in synchronism with the clock track. Thus, the phasing of the new data and the bit packing density are identical to that which was originally written by the master writer. This feature eliminates the need of an oscillator and/or a phase lock loop associated with the write electronics. The character and quality of the data spacing and bit packing density are maintained regardless of the speed of movement of the card 14.

Metering of the card 14 is accomplished by counting clock pulses from the time when the card leaves the card edge sensor 56. Counting pulses assures uniform metering of the card and is a function of the bit packing density of the clock track 93b.

The use of two tracks, particularly when side-by-side on a single tape, offers a number of advantages. The recording of timing pulses on the second track affords unusual tolerance of speed variation.

The pulses on the second track control the rate at which data is written on the first track as the direction of the tape is reversed. Uniformity and veracity of data recorded on the first track is attained independent of the reader of the first track.

Additionally, the use of timing pulses on the second track eliminates the use of oscillators, clocks, phase locked loops and other timing devices. The system is independent of the speed of movement of the tape
or the card, yet uniformity of data is obtained.

CLAIMS:

1.    A card punch comprising means (22,26) defining a narrow passageway for a card, means (37,42,43) for driving the card through the passageway, a needle punch (77) which is carried in a holder (74) mounted on a carrier (63) which is coupled to an actuator (66) and is arranged to pivot in a direction counter to the movement of the card to cause the punch to enter the passageway and to pierce the card, the holder being arranged to pivot, in the sense of the said movement of the card, relative to the carrier and against the force of a resilient bias.

2.    A card punch according to claim 1 in which the punch presses the card against a resilient backing roller (87).

3.    A card punch according to claim 2 in which the carrier (63) comprises a bell crank of which one arm is connected to the actuator and of which another arm carries the holder (74).

4.    A card punch according to any foregoing claim in which the means defining the passageway comprise a first member (97) having a first flat surface (98) facing inward of said passageway, a second member (97a) having a second flat surface (98a) facing the first flat surface and spaced from said first flat surface a distance slightly greater than the thickness of said card, first side edge guide means (96) having a thin third flat surface (101) facing inward of said passageway and being perpendicular to said first and second surfaces and intersecting said first and second surfaces in sharp corners, and second side edge guide means (96a), opposite said first side edge guide means having a thin fourth flat surface (101a) facing inward of said passageway and parallel to said third surface, said third and fourth surfaces being spaced apart a distance slightly more than the width of said card, each of said first and second side edge guide means comprising a member substantially T-shaped in cross-section.

5. A card punch according to claim 9 in which said first member (91) and said first side edge guide means (96) are integral and said second member and said second side edge guide means are integral.

6. A card punch according to claim 1 in which said card has a longitudinal strip of magnetic material thereon encoded with two longitudinal tracks, a first such track being encoded with first signals indicating a number of times of potential use of said card, a second such track being encoded with signals comprising timing pulses spaced longitudinally along said second track at equidistant intervals and the punch is associated with a reader comprising a first read head positioned to read said first track and a second read head positioned to read said second track as said card is driven, a counter receiving said second signals from said second head at a rate proportional to the speed of movement of said card as read from said second track by said second read head, a shift register storing said first signals on a time sequence as determined by said second signals, means receiving signals from said shift register and emitting a third signal which is numerically one less than said first signal, and means for energising associated external apparatus if said third signal is numerically at least one.

7. A card punch according to claim 6 in which said second signals are a square wave having a rate which is greater than the data rate of said first signals, said first signals comprising binary pulses and the assertive edge of said second signals coinciding with the start of said pulses of said first signals, said second signals strobing said first signals in said shift register to determine whether each said pulse of said first signal is a "1" or an "0".

8. A card punch according to claim 7 in which said means receiving signals from said shift register is a PROM and in which said first head is a read-write head, said means for driving is reversible to drive said card out of said card punch said PROM emitting a signal to encode on said first track a signal defining one fewer times of use than had been encoded thereon before insertion of said card in said apparatus.

9. A card punch according to claim 8 in which said pulses on said second track control the rate of encoding signals on said first track.

10. A card punch according to claim 9 in which said pulses on said second track control the rate of re-encoding a valid security code on said first track.

1/3

**Fig. 1**

**Fig. 3**

**Fig. 2**

Fig.4A

Fig.4

Fig.5

Fig.7

Fig.6

Fig. 8